# EUROPÄISCHE PATENTSCHRIFT

(11) **EP 3 430 368 B1**
(45) Veröffentlichungstag und Bekanntmachung des Hinweises auf die Patenterteilung: **27.05.2020**
(21) Anmeldenummer: 17722382.3
(22) Anmeldetag: 13.04.2017
(51) Int. Cl.: G01M 5/00, B64C 39/00, G01B 21/04, G01M 11/08, G01B 11/25, G05D 1/00

(54) **FLUGMOBIL ZUM SCANNEN EINES OBJEKTS UND SYSTEM ZUR SCHADENSANALYSE DES OBJEKTS**
AIRCRAFT FOR SCANNING AN OBJECT, AND SYSTEM FOR DAMAGE ANALYSIS FOR THE OBJECT
AÉRONEF POUR BALAYER UN OBJET ET SYSTÈME D'ANALYSE D'ENDOMMAGEMENT DE L'OBJET

(30) Priorität: 25.04.2016 DE 102016206982
(43) Veröffentlichungstag der Anmeldung: 23.01.2019
(73) Patentinhaber: Siemens Aktiengesellschaft, 80333 München (DE)
(72) Erfinder: HEINRICH, Christoph, 86609 Donauwörth (DE); HELD, Harald, 85461 Bockhorn (DE); LEE, Benjamin, 80637 München (DE)
(86) Internationale Anmeldenummer: PCT/EP2017/058993
(87) Internationale Veröffentlichungsnummer: WO 2017/186515

(56) Entgegenhaltungen:
- EP-A1- 2 511 656
- EP-A1- 2 902 744
- WO-A1-2014/170060
- WO-A1-2017/044344
- WO-A2-2014/027097
- DE-A1-102005 020 594
- DE-A1-102011 017 564
- US-A1- 2014 336 928

## Beschreibung

Eine Inspektion von schwer zugänglichen technischen Objekten wie z.B. Flugzeug- oder Schiffsrümpfen oder Rotorblättern von Windkraftanlagen erweist sich häufig als sehr aufwändig. Im Falle von Schiffsrümpfen bedarf es bei größeren Schäden eines längeren Aufenthaltes in einem Dock, weil eine Schadensanalyse häufig eine genaue Kenntnis einer Schadensgeometrie voraussetzt. Im Falle von Windkraftanlagen werden zur visuellen Inspektion von Rotorblättern neuerdings kamerabasierte Drohnensysteme verwendet. Eine solche visuelle Inspektion ist jedoch häufig nicht ausreichend genau, um Schäden mit der gebotenen Sicherheit zu erkennen oder auszuschließen. Im Zweifel sind die Rotorblätter in der Regel mit großem Aufwand zu demontieren, um am Boden eine genaue Vermessung der Schadensgeometrie durchzuführen. Eine solche Demontage ist häufig sehr kostenintensiv und hat zudem einen temporären Ausfall der Windkraftanlage zur Folge.

Das Dokument DE102005020594 A1 offenbart eine Drohne zur Beobachtung aus der Luft mittels mehrerer einstellbarer Kameras.

Das Dokument EP2902744 A1 offenbart eine Drohne zur Vermessung von Abstände und Winkeln von Objekten aus der Luft.

Das Dokument US2014/0336928 A1 offenbart eine Drohne mit einer Kamera zur Schadensanalyse einer Brücke in dem mehrere Bilder während des Fluges um die Brücke herum erzeugt werden und diese Bilder miteinander zu verknüpfen.

Es ist Aufgabe der vorliegenden Erfindung eine Anordnung anzugeben, mit der sich ein Zustand oder Schaden insbesondere großer Objekte genauer erfassen lässt.

Gelöst wird diese Aufgabe durch ein System zur Schadensanalyse den Merkmalen des Patentanspruchs 1.

Gemäß einem ersten Aspekt der Erfindung ist ein Flugmobil zum Scannen eines Objekts vorgesehen. Das Flugmobil umfasst eine Helikopter-Drohne, an der über ein aktiv drehbares Gelenk ein 3D-Scanner montiert ist. Der 3D-Scanner weist mindestens eine hochauflösende Kamera zum Aufnehmen einer Vielzahl von überlappenden Bildern des Objekts aus verschiedenen Aufnahmepositionen und Aufnahmerichtungen auf, so dass durch Vergleich der Bilder eine Position und Orientierung des 3D-Scanners relativ zum Objekt ermittelbar ist. Weiterhin verfügt das erfindungsgemäße Flugmobil über eine Koordinationseinrichtung zum koordinierten Steuern des 3D-Scanners, des Gelenks und der Helikopter-Drohne.

Gemäß einem weiteren Aspekt der Erfindung ist ein System zur Schadensanalyse eines Objekts vorgesehen. Dieses System verfügt über ein erfindungsgemäßes Flugmobil sowie über ein Bildverarbeitungsmodul zum Generieren einer Datendarstellung eines Oberflächenverlaufs des Objekts anhand der aufgenommenen Bilder. Weiterhin umfasst das System eine Bewertungseinrichtung zum Prüfen des Oberflächenverlaufs und zum Ausgeben einer Schadensangabe abhängig von der Prüfung. Die Prüfung kann beispielsweise durch Vergleich des Oberflächenverlaufs mit einem vorgegebenen Sollverlauf erfolgen.

Die Nutzung einer mit einem 3D-Scanner versehenen Helikopter-Drohne ist insofern vorteilhaft, als letztere in der Regel zum Schwebeflug fähig ist und auch rückwärts oder seitwärts fliegen kann. Dies erlaubt ein genaues und vollständiges Scannen auch großer Objekte, wie zB. von Rotoren von Windkraftanlagen ohne aufwendige Demontage. Durch die Verwendung eines 3D-Scanners können Oberflächen großer Objekte sehr genau vermessen werden und genaue, zur Schadensanalyse geeignete Geometriemodelle erstellt werden.

Vorteilhafte Ausführungsformen und Weiterbildungen der Erfindung sind in den abhängigen Ansprüchen angegeben.

Nach einer vorteilhaften Ausführungsform kann der 3D-Scanner ein mobiles 3D-Scansystem mit mehreren räumlich versetzten Kameras sein. Insbesondere kann 3D-Scantechnologie für handgeführte 3D-Scanner, z.B. mit Weiß-/Blau-/Blitzlichttechnik eingesetzt werden. Aktuell erhältliche mobile 3D-Scansysteme können auch bei moderaten Bewegungsschwankungen eine ScanGenauigkeit von Bruchteilen von Millimetern erreichen, z.B. ca. 1/30 mm. Derartige mobile 3D-Scansysteme erlauben genaue Scans auch beim Transport durch eine Helikopter-Drohne, die naturgemäß gewissen Bewegungsschwankungen durch Windböen unterworfen ist.

Der 3D-Scanner weist einen Projektor zum Projizieren von strukturiertem Licht auf das Objekt auf. Die mindestens eine Kamera ist entsprechend dazu ausgelegt, auf das Objekt projizierte Lichtstrukturen aufzulösen. Die Erfassung von auf das Objekt projizierten Lichtstrukturen verbessert in der Regel eine Erfassung eines dreidimensionalen Oberflächenverlaufs erheblich.

Nach einer vorteilhaften Weiterbildung der Erfindung kann das Flugmobil eine Markierungseinrichtung zum optischen Markieren von spezifischen Stellen einer Oberfläche des Objekts aufweisen. Eine solche Markierung kann z.B. durch Aufsprühen von Farbe auf das Objekt erfolgen. Derartige Markierungen können insbesondere an Stellen mit geringer eigener visueller Strukturierung eine Erfassung eines dreidimensionalen Oberflächenverlaufs erheblich verbessern.

Darüber hinaus ist die Koordinationseinrichtung dazu eingerichtet, abhängig von den aufgenommenen Bildern eine Position und/oder Orientierung des Flugmobils relativ zum Objekt zu ermitteln und abhängig davon Fluganweisungen an die Helikopter-Drohne, Drehanweisungen an das Gelenk, Scan-Anweisungen an den 3D-Scanner, Aufnahmeanweisungen an die mindestens eine Kamera und/oder Markierungsanweisungen an die Markierungseinrichtung zu übermitteln. Auf diese Weise kann eine Position, Orientierung und/oder ein bevorzugter Abstand des Flugmobils und/oder des 3D-Scanners relativ zum Objekt durch geeignete Fluganweisungen autonom oder teilautonom geregelt und/oder stabilisiert werden. Zudem kann die Ausrichtung des 3D-Scanners durch geeignete Drehanweisungen an das Gelenk autonom oder teilautonom geregelt und/oder stabilisiert werden. Hierdurch können insbesondere Positionsschwankungen des Flugmobils in koordinierter, autonomer oder teilautonomer Weise ausgeglichen werden. Weiterhin können noch nicht gescannte Teile des Objekts autonom oder teilautonom erkannt, angeflogen und gescannt werden. Dies erleichtert insbesondere ein Scannen von bewegten Objekten.

Ferner kann das Flugmobil über eine von der Helikopter-Drohne und dem 3D-Scanner gemeinsam zu nutzende Batterie verfügen. Die gemeinsame Nutzung der Batterie ist gegenüber einer Nutzung separater Batterien insofern vorteilhaft, als vermieden werden kann, dass eine erste Batterie leer ist und die Mission damit beendet wäre, wenn eine andere Batterie noch Energiereserven hätte.

Nach einer vorteilhaften Ausführungsform des erfindungsgemäßen Systems zur Schadensanalyse kann das Bildverarbeitungsmodul dazu eingerichtet sein, in verschiedenen überlappenden Bildern gemeinsame Bildmuster im Überlappungsbereich zu erfassen, die verschiedenen Bilder bezüglich des gemeinsamen Bildmusters einander zuzuordnen und anhand der einander zugeordneten Bilder einen bildübergreifenden Oberflächenverlauf zu ermitteln. Als Bildmuster kann insbesondere eine geometrische Struktur und/oder Textur der Objektoberfläche und/oder eine auf das Objekt projizierte Lichtstruktur erfasst werden. Ein solches bildmustertreues Zuordnen und Zusammensetzen verschiedener Bilder zu einem bildübergreifenden Oberflächenverlauf wird häufig auch als "Stitching" bezeichnet.

Nach einer vorteilhaften Weiterbildung der Erfindung kann das erfindungsgemäße System eine Simulationseinrichtung aufweisen zum Simulieren eines statischen und/oder dynamischen Verhaltens des Objekts anhand des Oberflächenverlaufs. Die Bewertungseinrichtung kann dann dazu eingerichtet sein, das simulierte Verhalten mit einem vorgegebenen Sollverhalten des Objekts zu vergleichen und die Schadensangabe abhängig vom Vergleichsergebnis auszugeben. Die Simulation kann hierbei z.B. mittels eines numerischen Finite-Elemente-Verfahrens durchgeführt werden. Insbesondere kann die Simulationseinrichtung dazu eingerichtet sein, anhand des Oberflächenverlaufs ein Volumenmodell des Objekts zu generieren und das Verhalten anhand des Volumenmodells zu simulieren. Mittels der Simulation kann der Oberflächenverlauf automatisch hinsichtlich seiner Auswirkungen auf eine Funktion des Objekts geprüft werden. Dies erleichtert eine automatische Schadensbewertung erheblich.

Ein Ausführungsbeispiel der Erfindung wird nachfolgend anhand der Zeichnung näher erläutert. Dabei zeigen jeweils in schematischer Darstellung:
- Figur 1A: eine Vorderansicht eines erfindungsgemäßen Flugmobils,
- Figur 1B: eine Untersicht des erfindungsgemäßen Flugmobils und
- Figur 2: ein Blockdiagramm eines erfindungsgemäßen Systems zur Schadensanalyse eines Objekts.

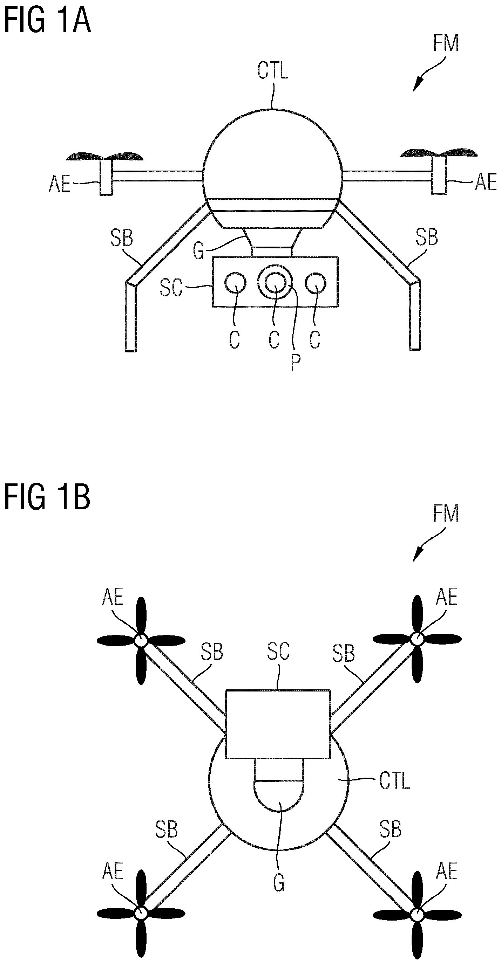

Die Figuren 1A und 1B zeigen jeweils ein erfindungsgemäßes Flugmobil FM zum Scannen eines Objekts in schematischer Darstellung. Während Figur 1A eine Vorderansicht des Flugmobils FM zeigt, ist in Figur 1B eine Untersicht desselben Flugmobils FM dargestellt.

Das Flugmobil FM umfasst eine interaktiv fernsteuerbare Helikopter-Drohne, an der über ein aktiv drehbares Gelenk G ein 3D-Scanner SC montiert ist. Die Helikopter-Drohne verfügt beispielhaft über vier Auftriebseinheiten AE mit jeweils einem Elektromotor, durch den ein senkrecht wirkender Propeller angetrieben wird. Alternativ kann auch eine Helikopter-Drohne mit einer anderen Anzahl von Auftriebseinheiten, z.B. eine sog. Octocopter-Drohne mit 8 Auftriebseinheiten verwendet werden. Die Helikopter-Drohne verfügt weiterhin über vier Standbeine SB.

Als 3D-Scanner SC wird ein mobiles, hochgenaues 3D-Scansystem z.B. mit Weiß-/Blau-/Blitzlichttechnik verwendet. Derartige mobile 3D-Scansysteme sind erst seit kurzem verfügbar und werden häufig in handgeführten 3D-Scannern eingesetzt. Die mobilen 3D-Scansysteme können auch bei moderaten Bewegungsschwankungen Scan-Genauigkeiten von ca. 1/30mm erreichen, was innerhalb der Zeichnungstoleranzen vieler hochgenau gefertigter Bauteile liegt. Zudem können mobile 3D-Scanner weniger als ein Kilogramm wiegen und in ihrer größten Abmessung unter 30cm bleiben. Eine solche kompakte Bauform ermöglicht überhaupt erst einen Transport per Helikopter-Drohne. Der Scanabstand derartiger 3D-Scanner kann ca. einen Meter erreichen, so dass es in der Regel nicht schwierig ist, Kollisionen des Flugmobils FM mit einem zu scannenden Objekt zu vermeiden. Ein räumlicher Versatz der Helikopter-Drohne durch Windböen kann mit zeitgemäßer mobiler 3D-Scantechnik korrigiert werden, da sowohl Geometrie- und Texturinformation des gescannten Objekts als auch eine Projektion strukturierten Lichtes verwendet werden können, um Scan-Abschnitte zusammenzufügen. Ein mobiler 3D-Scanner kann eine genaue Geometriebeschreibung einer Oberfläche des gescannten Objekts in Form einer Triangulierung, zum Beispiel im sogenannten stl-Format ausgeben.

Das Gelenk G hat eine horizontale und eine vertikale Drehachse, die jeweils per Elektromotor drehbar ist. Hierdurch kann der 3D-Scanner SC sowohl um die horizontale Drohnenachse als auch um die vertikale Drohnenachse gedreht werden, so dass durch geeignete Ansteuerung des Gelenks G das Objekt auch von oben gescannt werden kann.

Der 3D-Scanner SC umfasst mehrere hochauflösende (nur in Figur 1A dargestellte) Kameras C. Im vorliegenden Ausführungsbeispiel verfügt der 3D-Scanner SC über drei räumlich versetzte, hochauflösende Kameras C mit unterschiedlicher Blickrichtung zum Aufnehmen einer Vielzahl von überlappenden Bildern des zu scannenden Objekts aus verschiedenen Aufnahmepositionen und Aufnahmerichtungen. Die Kameras C weisen eine derart hohe Auflösung auf, dass eine Scangenauigkeit von Bruchteilen eines Millimeters, z.B. 1/30mm erreicht werden kann, und dass eine Position und eine Orientierung des 3D-Scanners SC relativ zur Oberfläche des zu scannenden Objekts durch Erkennung und Vergleich von in verschiedenen Bildern enthaltenen Bildmustern möglich ist.

Darüber hinaus weist der 3D-Scanner SC einen (nur in Figur 1A dargestellten) Projektor P auf zum Projizieren von strukturiertem Licht auf das zu scannende Objekt. Der Projektor P ist im vorliegenden Ausführungsbeispiel ringförmig um eine mittlere der drei Kameras C angeordnet.

Weiterhin verfügt das Flugmobil FM über eine Steuerung CTL zum Steuern des Flugmobils FM. Die Steuerung CTL ist zum Schutz vor Niederschlag und anderen Witterungseinflüssen mit einem Gehäuse umgeben.

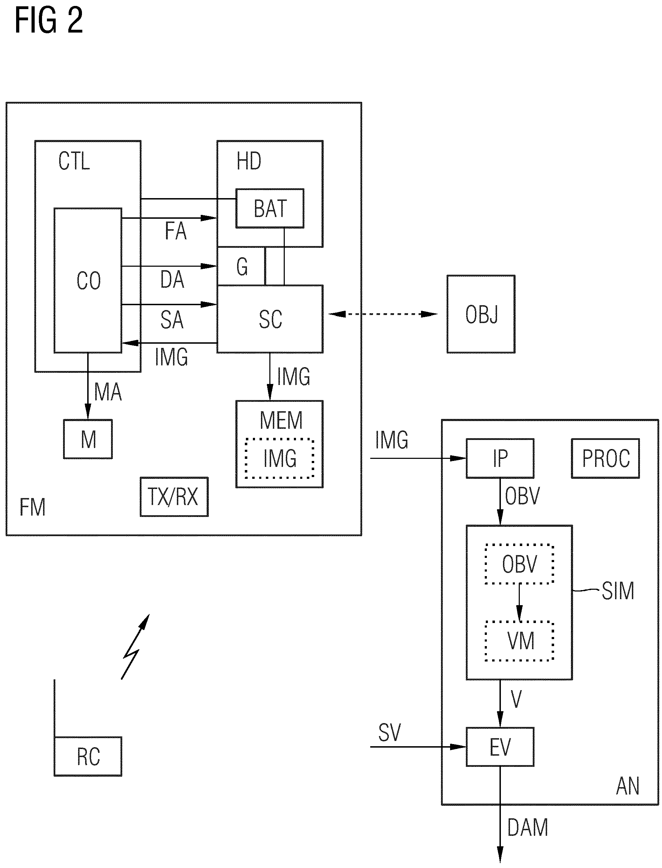

Figur 2 zeigt ein Blockdiagramm eines erfindungsgemäßen Systems zur Schadensanalyse eines Objekts OBJ. Das System umfasst ein erfindungsgemäßes Flugmobil FM, eine Fernsteuerung RC sowie eine Analyseeinrichtung AN. Das Flugmobil FM ist wie im Zusammenhang mit den Figuren 1A und 1B beschrieben implementiert und dient zum Scannen und zur Schadensanalyse des Objekts OBJ. Das zu analysierende Objekt OBJ kann zum Beispiel ein Rotorblatt einer Windkraftanalage sein.

Das Flugmobil FM umfasst eine Helikopter-Drohne HD mit einer wiederaufladbaren Batterie BAT, durch die der Antrieb der Helikopter-Drohne mit Energie versorgt wird. An der Helikopter-Drohne HD ist, wie oben bereits ausgeführt, über ein Gelenk G ein 3D-Scanner SC montiert. Der 3D-Scanner SC und das Gelenk G sind wie im Zusammenhang mit den Figuren 1A und 1B beschrieben implementiert.

Darüber hinaus verfügt das Flugmobil FM über eine Markierungseinrichtung M, einen Speicher MEM, eine drahtlose Sende-Empfangs-Einrichtung TX/RX sowie über eine Steuerung CTL. Auch der 3D-Scanner SC sowie die Steuerung CTL werden durch die Batterie BAT mit Energie versorgt. Die gemeinsame Nutzung der Batterie BAT ist gegenüber einer Nutzung separater Batterien insofern vorteilhaft, als vermieden werden kann, dass eine erste Batterie leer ist und die Mission damit beendet ist, wenn eine andere Batterie noch Energiereserven hätte. Dies gilt insbesondere, da die Helikopter-Drohne HD und der 3D-Scanner SC häufig unabhängig voneinander jeweils einen stark schwankenden Energiebedarf haben.

Wie in Figur 2 durch einen punktierten Doppelpfeil angedeutet, projiziert der 3D-Scanner SC strukturiertes Licht auf das zu analysierende Objekt OBJ und nimmt währenddessen durch die Kameras C eine Vielzahl von überlappenden hochaufgelösten Bildern IMG des Objekts OBJ aus verschiedenen Aufnahmepositionen und Aufnahmerichtungen auf. Insbesondere werden die Bilder IMG räumlich und zeitlich versetzt aufgenommen. Die aufgenommenen Bilder IMG werden durch den 3D-Scanner SC zunächst im Speicher MEM gespeichert, um eine zur Funkkommunikation mit der Fernsteuerung RC oder ggf. mit der Analyseeinrichtung AN erforderliche Bandbreite zu verringern.

Die Markierungseinrichtung M dient zum optischen Markieren von spezifischen Stellen einer Oberfläche des Objekts OBJ. So können zum Beispiel an spezifisch vorgegebenen und/oder exponierten Stellen einer Oberfläche des Objekts OBJ und/oder an Stellen mit geringer visueller Strukturierung Markierungen, zum Beispiel durch Aufsprühen von Farbe aufgebracht werden.

Die Sende-Empfangs-Einrichtung TX/RX dient zum Fernsteuern des Flugmobils FM sowie zum Übertragen von aufgenommenen Bildern. Vorzugsweise werden die vom 3D-Scanner SC aufgenommenen hochaufgelösten Bilder IMG in reduzierter Auflösung oder niedriger aufgelöste Bilder einer zu diesem Zweck vorgesehenen Kamera übertragen, um die erforderliche Funkübertragungsbandbreite zu verringern. Die Auflösung der zu übertragenden Bilder wird vorzugsweise so gewählt, dass das Flugmobil FM anhand der übertragenen Bilder durch einen Operateur des Flugmobils FM noch sicher fernsteuerbar ist.

Die Fernsteuerung RC dient entsprechend zum interaktiven Fernsteuern des Flugmobils FM durch den Operateur und zum Empfang sowie zur Anzeige der übertragenen Bilder.

Die Steuerung CTL umfasst eine Koordinationseinrichtung CO zum koordinierten Steuern des 3D-Scanners SC, des Gelenks G, der Helikopter-Drohne HD sowie der Markierungseinrichtung M. Die Koordinierung erfolgt insbesondere anhand der aufgenommenen Bilder IMG, die zu diesem Zweck vom 3D-Scanner SC zur Koordinationseinrichtung CO übermittelt werden. Abhängig von den aufgenommenen Bildern IMG ermittelt die Koordinationseinrichtung CO Position und Orientierung des Flugmobils FM relativ zum Objekt OBJ. Abhängig davon werden dann durch die Koordinationseinrichtung CO Fluganweisungen FA an die Helikopter-Drohne HD, spezifische Drehanweisungen für die Drehachsen des Gelenks G an das Gelenk G, Scan-Anweisungen SA an den 3D-Scanner SC und/oder Markierungsanweisungen MA an die Markierungseinrichtung M in koordinierter Weise übermittelt. Die Scan-Anweisungen SA können hierbei Aufnahmeanweisungen an eine jeweilige Kamera C umfassen.

Die Analyseeinrichtung AN wertet die aufgenommenen hochaufgelösten Bilder IMG aus, um eine Schadensanalyse durchzuführen. Die Analyseeinrichtung AN kann als separates System implementiert sein oder ganz oder teilweise in das Flugmobil FM oder die Fernsteuerung RC integriert sein. Die Analyseeinrichtung AN umfasst einen oder mehrere Prozessoren PROC zum Ausführen aller Analyseschritte.

Zum Ausführen der Schadensanalyse werden die aufgenommenen hochaufgelösten Bilder IMG aus dem Speicher MEM ausgelesen und zu einem Bildverarbeitungsmodul IP der Analyseeinrichtung AN übermittelt. Durch das Bildverarbeitungsmodul IP wird eine Datendarstellung eines Oberflächenverlaufs OBV des gescannten Objekts OBJ anhand der aufgenommenen Bilder IMG generiert. Die Datendarstellung beschreibt vorzugsweise einen Verlauf einer zweidimensionalen Oberfläche des Objekts OBJ im dreidimensionalen Raum, zum Beispiel in Form einer Triangulierung.

Eine solche Triangulierung kann insbesondere im sogenannten stl-Format dargestellt werden.

Zur Generierung des Oberflächenverlaufs OBV versucht das Bildverarbeitungsmodul IP in verschiedenen der überlappenden Bilder IMG gemeinsame Bildmuster im Überlappungsbereich mittels eines Mustererkennungsverfahrens zu erkennen und zu erfassen. Als Bildmuster können hierbei insbesondere geometrische Strukturen und/oder Texturen der Objektoberfläche und/oder eine auf das Objekt OBJ projizierte Lichtstruktur oder darauf aufgebrachte Markierungen erfasst werden. Sofern ein gemeinsames Bildmuster in verschiedenen Bildern erkannt wird, können diese bezüglich des gemeinsamen Bildmusters einander zugeordnet werden, so dass die Bildmuster dieser Bilder abbildungstreu aufeinander abgebildet werden. Anhand der einander zugeordneten Bilder kann dann ein bildübergreifender Oberflächenverlauf ermittelt werden. Ein solches abbildungstreues bzw. bildmustertreues Zuordnen und Zusammensetzen verschiedener Bilder zu einem bildübergreifenden Oberflächenverlauf wird häufig auch als "Stitching" bezeichnet.

Anhand der einander zugeordneten Bilder können auch Position und Orientierung des 3D-Scanners SC relativ zum Objekt OBJ ermittelt werden.

Das Bildverarbeitungsmodul IP kann unabhängig von anderen Komponenten der Analyseeinrichtung AN separat im Flugmobil FM oder im 3D-Scanner SC integriert werden. Dies erlaubt eine Vorverarbeitung der hochaufgelösten Bilder IMG im Flugmobil FM bzw. im 3D-Scanner SC.

Das Bildverarbeitungsmodul IP übermittelt die generierte Datendarstellung des Oberflächenverlaufs OBV zu einer Simulationseinrichtung SIM zum Simulieren eines statischen oder dynamischen Verhaltens V des Objekts OBJ anhand des Oberflächenverlaufs OBV. Dabei wird durch die Simulationseinrichtung SIM anhand des Oberflächenverlaufs OBV zunächst ein Volumenmodell VM des Objekts OBJ generiert und schließend das Verhalten V anhand des Volumenmodells VM simuliert. Mittels der Simulation können Struktur und strömungsmechanische Auswirkungen eines Schadens und damit eine Schwere des Schadens automatisch bewertet werden.

Das simulierte Verhalten V wird in Form einer geeigneten Datendarstellung vom Simulationsmodul SIM zu einer Bewertungseinrichtung EV der Analyseeinrichtung AN übermittelt. Weiterhin wird ein vorgegebenes Sollverhalten SV des Objekt OBJ durch die Bewertungseinrichtung EV eingelesen. Letztere vergleicht dann das simulierte Verhalten V mit dem vorgegebenen Sollverhalten SV und gibt abhängig vom Vergleichsergebnis eine Schadensangabe DAM aus. Hierbei kann ein Abstandsmaß für eine Abweichung zwischen Sollverhalten SV und simuliertem Verhalten V vorgegeben sein, das mit einem Schwellwert verglichen wird. Bei Überschreitung des Schwellwertes kann dann ein bestehender oder drohender Schaden durch eine entsprechende Schadensangabe DAM angezeigt werden. Darauf basierend kann entschieden werden, ob ein betroffenes Bauteil auszutauschen ist oder nicht.

Durch die Simulation und den Vergleich des simulierten Verhaltens V mit dem Sollverhalten SV wird der Oberflächenverlauf OBV hinsichtlich seiner Auswirkungen auf eine Funktion des Objekts OBJ geprüft. Alternativ oder zusätzlich kann der Oberflächenverlauf OBV auch direkt mit einem vorgegebenen Sollverlauf verglichen werden, um abhängig davon die Schadensangabe DAM auszugeben.

Mittels der Erfindung lassen sich auch schwer zugängliche Bauteile von z.B. Windkraftanlagen, Schiffen oder Flugzeugen ohne aufwändige Demontage an Ort und Stelle inspizieren. Aufgrund der Simulation der Auswirkungen sichtbarer Schäden kann in vielen Fällen sofort entschieden werden, ob ein Schaden akzeptabel ist oder nicht.

## Patentansprüche

1. System zur Schadensanalyse eines Objekts (OBJ), mit
a) einem Flugmobil (FM) zum Scannen des Objekts (OBJ), mit
- einer Helikopter-Drohne (HD),
- einem über ein aktiv drehbares Gelenk (G) an der Helikopter-Drohne (HD) montierten 3D-Scanner (SC), der mindestens eine hochauflösende Kamera (C) zum Aufnehmen einer Vielzahl von überlappenden Bildern (IMG) des Objekts (OBJ) aus verschiedenen Aufnahmepositionen und Aufnahmerichtungen aufweist, so dass durch Vergleich der Bilder (IMG) eine Position und Orientierung des 3D-Scanners (SC) relativ zum Objekt (OBJ) ermittelbar ist, wobei der 3D-Scanner (SC) einen Projektor zum Projizieren von strukturiertem Licht auf das Objekt (OBJ) aufweist und die mindestens eine hochauflösende Kamera (C) dazu ausgelegt ist, auf das Objekt (OBJ) projizierte Lichtstrukturen aufzulösen, und
- einer Koordinationseinrichtung (CO)
zum koordinierten Steuern des 3D-Scanners (SC), des Gelenks (G) und der Helikopter-Drohne (HD), wobei die Koordinationseinrichtung (CO) dazu eingerichtet ist, abhängig von den aufgenommenen Bildern (IMG) eine Position und/oder Orientierung des Flugmobils (FM) relativ zum Objekt (OBJ) zu ermitteln und abhängig davon Fluganweisungen (FA) an die Helikopter-Drohne (HD), Drehanweisungen (DA) an das Gelenk (G), Scan-Anweisungen (SA) an den 3D-Scanner (SC) und/oder Aufnahmeanweisungen an die mindestens eine Kamera (C) zu übermitteln,
b) einem Bildverarbeitungsmodul (IP) zum Generieren einer Datendarstellung eines Oberflächenverlaufs (OBV) des Objekts (OBJ) anhand der aufgenommenen Bilder (IMG) und
c) einer Bewertungseinrichtung (EV) zum Prüfen des Oberflächenverlaufs (OBV) und zum Ausgeben einer Schadensangabe (DAM) abhängig von der Prüfung.

2. System zur Schadensanalyse nach Anspruch 1, **dadurch gekennzeichnet,**
**dass** das Bildverarbeitungsmodul (IP) dazu eingerichtet ist,
in verschiedenen überlappenden Bildern (IMG) gemeinsame Bildmuster im Überlappungsbereich zu erfassen,
die verschiedenen Bilder (IMG) bezüglich des gemeinsamen Bildmusters einander zuzuordnen, und
anhand der einander zugeordneten Bilder einen bildübergreifenden Oberflächenverlauf (OBV) zu ermitteln.

3. System zur Schadensanalyse nach Anspruch 2, **dadurch gekennzeichnet,**
**dass** das Bildverarbeitungsmodul (IP) dazu eingerichtet ist, eine geometrische Struktur und/oder Textur der Objektoberfläche und/oder eine auf das Objekt (OBJ) projizierte Lichtstruktur als Bildmuster zu erfassen.

4. System zur Schadensanalyse nach einem der vorhergehenden Ansprüche, **dadurch gekennzeichnet,**
**dass** eine Simulationseinrichtung (SIM) vorgesehen ist zum Simulieren eines statischen und/oder dynamischen Verhaltens (V) des Objekts (OBJ) anhand des Oberflächenverlaufs (OBV), und dass die Bewertungseinrichtung (EV) dazu eingerichtet ist, das simulierte Verhalten (V) mit einem vorgegebenen Sollverhalten (SV) des Objekts (OBJ) zu vergleichen und die Schadensangabe (DAM) abhängig vom Vergleichsergebnis auszugeben.

5. System zur Schadensanalyse nach Anspruch 4, **dadurch gekennzeichnet, dass**
die Simulationseinrichtung (SIM) dazu eingerichtet ist, anhand des Oberflächenverlaufs (OBV) ein Volumenmodell (VM) des Objekts (OBJ) zu generieren und das Verhalten (V) anhand des Volumenmodells (VM) zu simulieren.

6. System zur Schadensanalyse nach einem der vorhergehenden Ansprüche, **dadurch gekennzeichnet,**
**dass** der 3D-Scanner (SC) ein mobiles 3D-Scansystem mit mehreren räumlich versetzten Kameras (C) ist.

7. System zur Schadensanalyse nach einem der vorhergehenden Ansprüche, **dadurch gekennzeichnet,**
**dass** das Flugmobil (FM) eine Markierungseinrichtung (M) zum optischen Markieren von spezifischen Stellen einer Oberfläche des Objekts (OBJ) aufweist.

8. System zur Schadensanalyse nach einem der vorhergehenden Ansprüche, **dadurch gekennzeichnet,**
**dass** das Flugmobil (FM) eine von der Helikopter-Drohne (HD) und dem 3D-Scanner (SC) gemeinsam zu nutzende Batterie (BAT) aufweist.

## Claims

1. System for analysing damage to an object (OBJ), having
a) a moving flying object (FM) for scanning the object (OBJ) having
- a helicopter drone (HD),
- a 3-D scanner (SC) which is mounted on the helicopter drone (HD) via an actively rotatable joint (G) and has at least one high-resolution camera (C) for recording a multiplicity of overlapping images (IMG) of the object (OBJ) from different recording positions and recording directions, with the result that a position and an orientation of the 3-D scanner (SC) relative to the object (OBJ) can be determined by comparing the images (IMG), wherein the 3-D scanner (SC) has a projector for projecting structured light onto the object (OBJ), and the at least one high-resolution camera (C) is designed to resolve light structures projected onto the object (OBJ) and
- a coordination device (CO) for controlling the 3-D scanner (SC), the joint (G) and the helicopter drone (HD) in a coordinated manner, wherein the coordination device (CO) is set up to determine a position and/or an orientation of the moving flying object (FM) relative to the object (OBJ) on the basis of the recorded images (IMG) and, on the basis thereof, to transmit flight instructions (FA) to the helicopter drone (HD), rotation instructions (DA) to the joint (G), scanning instructions (SA) to the 3-D scanner (SC) and/or recording instructions to the at least one camera (C),
b) an image processing module (IP) for generating a data representation of a surface profile (OBV) of the object (OBJ) on the basis of the recorded images (IMG), and
c) an assessment device (EV) for checking the surface profile (OBV) and for outputting a statement of damage (DAM) on the basis of the check.

2. System for analysing damage according to Claim 1, **characterized**
**in that** the image processing module (IP) is set up to capture common image patterns in the overlapping region in different overlapping images (IMG),
to assign the different images (IMG) to one another with respect to the common image pattern, and
to determine a surface profile (OBV) across images on the basis of the images assigned to one another.

3. System for analysing damage according to Claim 2, **characterized**
**in that** the image processing module (IP) is set up to capture a geometrical structure and/or texture of the object surface and/or a light structure projected onto the object (OBJ) as image patterns.

4. System for analysing damage according to one of the preceding claims, **characterized**
**in that** a simulation device (SIM) is provided for the purpose of simulating a static and/or dynamic behavior (V) of the object (OBJ) on the basis of the surface profile (OBV), and
**in that** the assessment device (EV) is set up to compare the simulated behavior (V) with a predefined desired behavior (SV) of the object (OBJ) and to output the statement of damage (DAM) on the basis of the comparison result.

5. System for analysing damage according to Claim 4, **characterized in that**
the simulation device (SIM) is set up to generate a volume model (VM) of the object (OBJ) on the basis of the surface profile (OBV) and to simulate the behavior (V) on the basis of the volume model (VM).

6. System for analysing damage according to one of the preceding claims, **characterized**
**in that** the 3-D scanner (SC) is a mobile 3-D scanning system having a plurality of spatially offset cameras (C).

7. System for analysing damage according to one of the preceding claims, **characterized**
**in that** the moving flying object (FM) has a marking device (M) for optically marking specific points of a surface of the object (OBJ).

8. System for analysing damage according to one of the preceding claims, **characterized**
**in that** the moving flying object (FM) has a battery (BAT) to be jointly used by the helicopter drone (HD) and the 3-D scanner (SC).

## Revendications

1. Système d'analyse d'endommagement d'un objet (OBJ), comprenant
a) un engin volant (FM) pour balayer l'objet (OBJ), comprenant
- un drone d'hélicoptère (HD)
- un dispositif de balayage 3D (SC) monté sur le drone d'hélicoptère (HD) par le biais d'une articulation (G) pouvant tourner activement, qui comprend au moins une caméra à haute résolution (C) pour acquérir une pluralité d'images (IMG) se chevauchant de l'objet (OBJ) à partir de différentes positions d'acquisition et orientations d'acquisition, de manière à pouvoir déterminer une position et une orientation du dispositif de balayage 3D (SC) par rapport à l'objet (OBJ) par une comparaison des images (IMG), dans lequel le dispositif de balayage 3D (SC) comprend un projecteur pour projeter de la lumière structurée sur l'objet (OBJ) et la au moins une caméra à haute résolution (C) est configurée de manière à définir des structures de lumière projetées sur l'objet (OBJ), et
- un dispositif de coordination (CO) pour une commande coordonnée du dispositif de balayage 3D (SC), de l'articulation (G) et du drone d'hélicoptère (HD), dans lequel le dispositif de coordination (CO) est configuré de manière à déterminer une position et/ou une orientation de l'engin volant (FM) par rapport à l'objet (OBJ) en fonction des images acquises (IMG), et en fonction de celles-ci, à transmettre des instructions de vol (FA) au drone d'hélicoptère (HD), des instructions de rotation (DA) à l'articulation (G), des instructions de balayage (SA) au dispositif de balayage 3D (SC) et/ou des instructions d'acquisition à la au moins une caméra (C),
b) un module de traitement d'image (IP) pour générer une représentation de données d'un tracé de surface (OBV) de l'objet (OBJ) sur la base des images acquises (IMG), et
c) un dispositif d'évaluation (EV) pour examiner le tracé de surface (OBV) et pour fournir une indication d'endommagement (DAM) en fonction de l'examen.

2. Système d'analyse d'endommagement selon la revendication 1, **caractérisé en ce que** le module de traitement d'image (IP) est configuré de manière à acquérir un motif d'image commun dans la zone de chevauchement dans différentes images se chevauchant (IMG),
à associer les différentes images (IMG) entre elles en relation avec le motif d'image commun, et
en se basant sur les images associées l'une à l'autre, à déterminer un tracé de surface (OBV) global.

3. Système d'analyse d'endommagement selon la revendication 2, **caractérisé en ce que** le module de traitement d'image (IP) est configuré de manière à acquérir une structure et/ou une texture géométrique de la surface de l'objet et/ou une structure de lumière projetée sur l'objet (OBJ) à titre de motif d'image.

4. Système d'analyse d'endommagement selon l'une des revendications précédentes, **caractérisé en ce qu'**un dispositif de simulation (SIM) est prévu pour simuler un comportement (V) statique et/ou dynamique de l'objet (OBJ) sur la base du tracé de surface (OBV), et **en ce que** le dispositif d'évaluation (EV) est configuré de manière à comparer le comportement simulé (V) à un comportement théorique (SV) prédéterminé de l'objet (OBJ) et à fournir l'indication d'endommagement (DAM) en fonction du résultat de la comparaison.

5. Système d'analyse d'endommagement selon la revendication 4, **caractérisé en ce que** le dispositif de simulation (SIM) est configuré de manière à générer, sur la base du tracé de surface (OBV), un modèle volumique (VM) de l'objet (OBJ) et à simuler le comportement (V) sur la base du modèle volumique (VM).

6. Système d'analyse d'endommagement selon l'une des revendications précédentes, **caractérisé en ce que** le dispositif de balayage 3D (SC) est un système de balayage 3D mobile comprenant plusieurs caméras (C) décalées dans l'espace.

7. Système d'analyse d'endommagement selon l'une des revendications précédentes, **caractérisé en ce que** l'engin volant (FM) comprend un dispositif de marquage (M) pour marquer optiquement des endroits spécifiques d'une surface de l'objet (OBJ).

8. Système d'analyse d'endommagement selon l'une des revendications précédentes, **caractérisé en ce que** l'engin volant (FM) comprend une batterie (BAT) à utiliser en commun par le drone d'hélicoptère (HD) et le dispositif de balayage 3D (SC).
